(19)

Europäisches Patentamt

European Patent Office

Office européen des brevets

(11) **EP 4 779 529 A1**

(12) **EUROPEAN PATENT APPLICATION**

(43) Date of publication:
**22.07.2026 Bulletin 2026/30**

(21) Application number: **26151627.2**

(22) Date of filing: **13.01.2026**

(51) International Patent Classification (IPC):
***G06N 10/20*** (2022.01)

(52) Cooperative Patent Classification (CPC):
**G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.01.2025 JP 2025007689**

(71) Applicant: **FUJITSU LIMITED**
**Kawasaki-shi, Kanagawa 211-8588 (JP)**

(72) Inventor: **GOKITA, Shun**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57) An information processing apparatus divides a quantum circuit into subcircuits each assigned to one of a plurality of quantum processors. The information processing apparatus predicts, for each of the subcircuits, fidelity when the subcircuit is executed by the quantum processor assigned thereto. The information processing apparatus repeats the process of dividing the quantum circuit into the subcircuits by increasing the number of subcircuits and the process of predicting the fidelity until the fidelity satisfies a predetermined criterion. When the criterion is satisfied, the information processing apparatus instructs a quantum computer to execute each of the subcircuits by the quantum processor assigned thereto. The information processing apparatus calculates, by classical computation, a computation result of the quantum circuit based on execution results of the subcircuits.

FIG. 1

EP 4 779 529 A1

**Description**

FIELD

The embodiments discussed herein relate to a computer program, a quantum computation support method, and an information processing apparatus.

BACKGROUND

In a quantum computer, a procedure of quantum computation is represented by a quantum circuit. As quantum computation becomes more complex, the scale of the quantum circuit increases, and it becomes difficult to execute the quantum circuit due to hardware constraints of the quantum computer. Therefore, a method has been considered in which a large-scale quantum circuit is divided into small subcircuits, and each subcircuit is executed and measured in parallel by a plurality of qubit devices or a plurality of quantum computers. In this case, classical computation based on execution results of the plurality of subcircuits reconstructs the probability amplitudes of the original quantum circuit. By dividing the large-scale quantum circuit into subcircuits and executing the subcircuits on small-scale quantum computers having high fidelity, improvement in computational accuracy is expected.

Methods for dividing a quantum circuit include "wire cutting" and "gate cutting". "Wire cutting" is a method of cutting a horizontal line representing gate operations for each qubit. "Gate cutting" is a method of cutting a line connecting qubits operated by N-qubit gates (where N is an integer of two or more).

As a technique related to division of a quantum circuit, for example, a simulation method in which a digital description of a quantum circuit is divided into a plurality of quantum subcircuits has been proposed. Furthermore, a technique for representing a solution to a division problem of dividing a quantum circuit into quantum subcircuits in a tree structure has also been proposed. As a division method based on "wire cutting", a method called CutQC has been proposed. Examples of related literatures are as follows.

Japanese National Publication of International Patent Application No. 2020-534603

U.S. Patent Application Publication No. 2024/0160979

Wei Tang, Teague Tomesh, Martin Suchara, Jeffrey Larson, and Margaret Martonosi, "CutQC: Using Small Quantum Computers for Large Quantum Circuit Evaluations", ASPLOS '21: Proceedings of the 26th ACM International Conference on Architectural Support for Programming Languages and Operating Systems, Association for Computing Machinery, April 17, 2021, pp. 473-486

When a quantum circuit is divided into subcircuits, the plurality of subcircuits is executed in a distributed manner among a plurality of quantum processing units (QPUs). However, load and performance differ among the QPUs. Therefore, when quantum computation is executed using subcircuits, performance parameters such as execution time and fidelity may fall short of expectations. For example, if the execution of a part of the subcircuits takes longer than expected, the overall computation time, including subsequent classical computation, may increase, resulting in failure to complete the processing within a time requested. Furthermore, if the fidelity of computation performed by a part of the subcircuits is too low, the fidelity of the final computation result may fail to reach the quality needed.

SUMMARY

One aspect provides a technique for suppressing unexpected performance degradation that occurs when a quantum circuit is divided into subcircuits.

In one aspect, there is provided a computer program that causes a computer to execute a process including: dividing a quantum circuit into a predetermined number of subcircuits each assigned to one of a plurality of quantum processors included in a quantum computer; predicting fidelity when each of the predetermined number of subcircuits is executed by a corresponding one of the plurality of quantum processors assigned thereto; repeating the dividing of the quantum circuit into the predetermined number of subcircuits by increasing the predetermined number of subcircuits and the predicting of the fidelity, when the predicted fidelity does not satisfy a predetermined criterion; instructing the quantum computer to execute each of the predetermined number of subcircuits by the corresponding one of the plurality of quantum processors assigned thereto, when the criterion is satisfied; and calculating, by classical computation, a computation result of the quantum circuit based on execution results of each of the predetermined number of subcircuits by the quantum computer.

BRIEF DESCRIPTION OF DRAWINGS

FIG. 1 illustrates an example of a quantum computation support method according to a first embodiment;

FIG. 2 illustrates an example of a configuration of a quantum computation system;

FIG. 3 illustrates an example of hardware configurations of devices included in the quantum computation system;

FIG. 4 illustrates a first example of subcircuits generated by dividing a quantum circuit;

FIG. 5 illustrates a second example of subcircuits generated by dividing a quantum circuit;

FIG. 6 illustrates an example of a process for calculating probability amplitudes by using classical computation;

FIG. 7 illustrates an example of a method for dividing a quantum circuit;

FIG. 8 illustrates an example of loads for each QPU;

FIG. 9 illustrates an example of fidelity of each QPU;

FIG. 10 is a block diagram illustrating an example of functions of respective apparatuses in a second embodiment;

FIG. 11 illustrates an example of a process of dividing a quantum circuit in a quantum computation support apparatus;

FIG. 12 illustrates an example of a DAG corresponding to a quantum circuit;

FIG. 13 is a flowchart illustrating an example of a procedure of quantum computation support processing according to the second embodiment;

FIG. 14 is a block diagram illustrating an example of functions of each apparatus according to a third embodiment; and

FIG. 15 is a flowchart illustrating an example of a procedure of quantum computation support processing according to the third embodiment.

## DESCRIPTION OF EMBODIMENTS

Hereinafter, embodiments will be described with reference to the drawings. Each embodiment may be implemented by combining a plurality of embodiments as long as no contradiction arises.

(a) First Embodiment

A first embodiment is a quantum computation support method for suppressing unexpected performance degradation that occurs when a quantum circuit is divided into subcircuits.

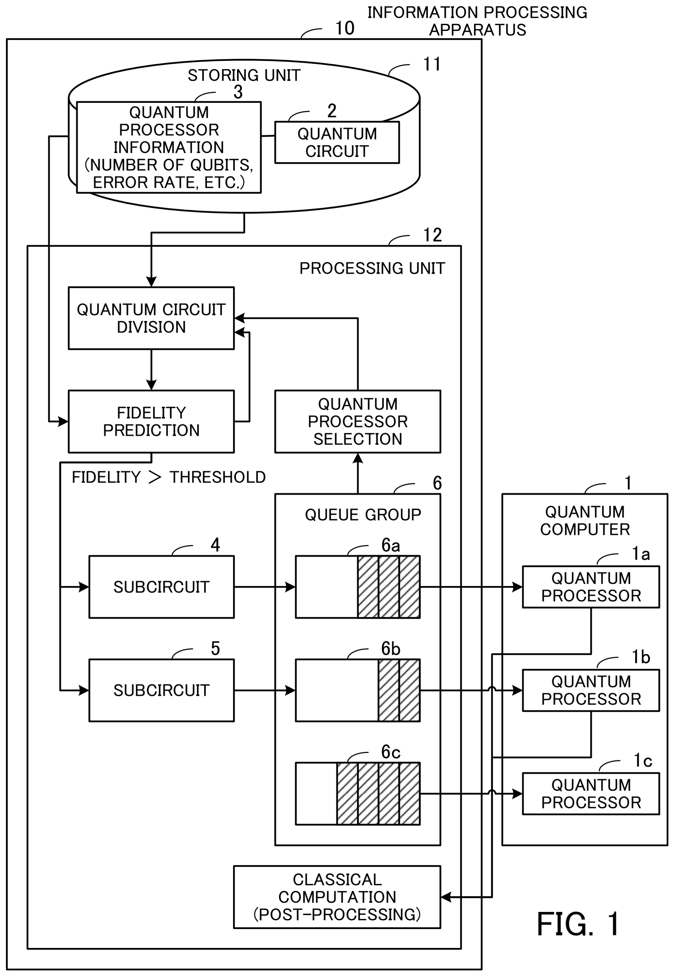

FIG. 1 illustrates an example of the quantum computation support method according to the first embodiment. FIG. 1 illustrates an information processing apparatus 10 for executing the quantum computation support method. The information processing apparatus 10 executes the quantum computation support method according to the first embodiment, for example, by executing a predetermined quantum computation support program.

The information processing apparatus 10 includes a storing unit 11 and a processing unit 12. The storing unit 11 is, for example, a memory or a storage device included in the information processing apparatus 10. The processing unit 12 is, for example, a processor included in the information processing apparatus 10. The information processing apparatus 10 may include a plurality of processors. Among a plurality of processes performed by the information processing apparatus 10, one process and another process may be executed by different ones of the plurality of processors, respectively.

The storing unit 11 stores a quantum circuit 2 and quantum processor information 3. The quantum circuit 2 is information indicating a procedure of quantum computation executed by a quantum computer 1 through quantum gates. The quantum processor information 3 includes information such as the number of qubits and an error rate of quantum processors 1a to 1c included in the quantum computer 1. The quantum computer 1 is not limited to a configuration that integrally includes the plurality of quantum processors 1a to 1c as hardware. For example, the plurality of quantum processors 1a to 1c may be distributed over a cloud computing system.

The processing unit 12 divides the quantum circuit 2 into subcircuits 4 and 5 such that a target fidelity is satisfied, and executes the subcircuits 4 and 5 by the quantum computer 1. At that time, the processing unit 12 divides the quantum circuit 2 so that an amount of computation of classical computation executed as post-processing after execution of the subcircuits 4 and 5 becomes as small as possible. For example, the processing unit 12 performs quantum computation support processing by the following procedure.

The processing unit 12 selects two or more quantum processors (first quantum processors) to be used for computation of the quantum circuit 2 from a plurality of quantum processors 1a to 1c included in the quantum computer 1. For example, the processing unit 12 calculates a waiting time when each of the plurality of quantum processors 1a to 1c executes a subcircuit. For example, the processing unit 12 includes a queue group 6 including queues 6a to 6c corresponding to the quantum processors 1a to 1c, respectively. Jobs to be executed by the corresponding quantum processors 1a to 1c are registered in the queues 6a to 6c. For example, the processing unit 12 predicts an execution time of the jobs registered in the queues 6a to 6c. The processing unit 12 sets a total of execution times of the jobs in each of the queues 6a to 6c as a waiting time of the quantum processor 1a to 1c corresponding to the queue. The processing unit 12 selects the quantum processors in order of shorter waiting times. The processing unit 12 terminates the selection of the quantum processors when a total number of qubits of the selected quantum processors becomes equal to or greater than the number of qubits of the quantum circuit 2.

The processing unit 12 divides the quantum circuit 2 into a predetermined number of the subcircuits 4 and 5 assigned to any of the selected quantum processors. For example, the processing unit 12 solves an optimization problem of optimizing a value of an objective function including a variable indicating a cut position of the quantum circuit 2 under a constraint that the number of qubits of each of the subcircuits 4 and 5 is equal to or less than the number of qubits of the quantum processor to which the subcircuit is assigned. The processing unit 12 determines a solution of the optimization problem as a cut position of the quantum circuit 2 for dividing the quantum circuit 2 into the subcircuits.

The processing unit 12 predicts fidelity when each of the subcircuits 4 and 5 is executed by the assigned quantum processor. For example, the processing unit 12 predicts fidelity of each of the subcircuits 4 and 5 based on an error rate of the quantum processor assigned to each of the subcircuits 4 and 5.

When a predicted fidelity does not satisfy a predetermined criterion, the processing unit 12 repeats a process of dividing the quantum circuit 2 into subcircuits and predicting fidelity while incrementally increasing the number of subcircuits. The predetermined criterion for fidelity is, for example, that fidelities of subcircuits 4 and 5 are both equal to or greater than a threshold. When increasing the number of subcircuits, the processing unit 12 additionally selects, for example, a quantum processor to be assigned.

When the predetermined criterion is satisfied, the processing unit 12 instructs the quantum computer 1 to execute each of the subcircuits 4 and 5 by the assigned quantum processor. The processing unit 12 calculates, by classical computation, a computation result obtained when the quantum circuit 2 is executed, based on execution results of the subcircuits 4 and 5 by the quantum computer 1.

In this manner, the quantum circuit 2 is divided so that fidelity satisfies the predetermined criterion. As a result, a quantum computation result satisfying a target fidelity requirement is obtained based on the divided subcircuits 4 and 5. That is, unexpected performance degradation occurring when the quantum circuit 2 is divided into subcircuits is suppressed.

Furthermore, by predicting fidelity of each of the subcircuits 4 and 5 based on an error rate of a quantum processor assigned to each of the subcircuits 4 and 5, the processing unit 12 calculates fidelity reflecting performance variations among quantum processors. As a result, accuracy of fidelity calculation is improved, and occurrence of unexpected degradation in fidelity is suppressed.

In addition, when selecting quantum processors, the processing unit 12 selects the quantum processors in order of shorter waiting times. As a result, utilization efficiency of the quantum processors 1a, 1b, and 1c in the quantum computer 1 is improved.

In the division process of the quantum circuit 2, the processing unit 12 may determine a cut position of the quantum circuit 2 for dividing the quantum circuit 2 into subcircuits by solving an optimization problem of minimizing a value of an objective function indicating an amount of computation of classical computation. As a result, the amount of computation of classical computation is reduced, and total computation time is shortened. That is, when the number of subcircuits is increased, a size of each subcircuit becomes smaller and fidelity becomes higher. On the other hand, when the number of subcircuits is increased, an amount of computation of classical computation executed as post-processing increases, and classical computation takes longer. By dividing the quantum circuit 2 so that the amount of computation of classical computation is minimized, prolongation of classical computation time is suppressed.

Among subcircuits generated in the division process of the quantum circuit 2, the processing unit 12 may integrate assignments of two or more subcircuits that are executable in parallel by one quantum processor into the one quantum processor. The two or more subcircuits executable in parallel by one quantum processor refer to, for example, subcircuits whose total number of qubits is equal to or less than the number of qubits of the one quantum processor. By integrating assignments of the subcircuits, utilization efficiency of the quantum computer 1 is improved.

(b) Second Embodiment

A second embodiment is a quantum computation system that performs quantum computation by a quantum computer based on a plurality of subcircuits obtained by dividing a quantum circuit and obtains a computation result of the quantum circuit by classical computation using computation results of the plurality of subcircuits. The quantum computation system according to the second embodiment divides the quantum circuit while taking into account differences in performance among QPUs so that expected performance such as fidelity is optimized.

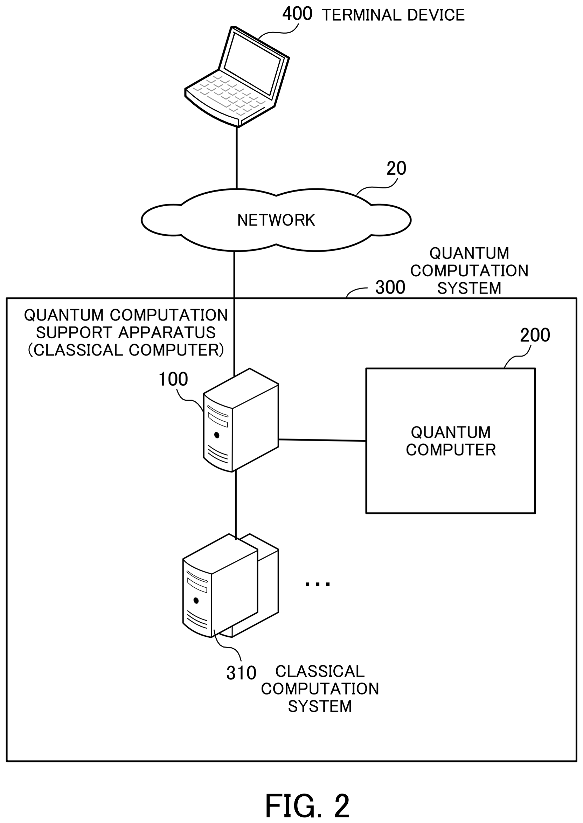

FIG. 2 illustrates an example of a configuration of a quantum computation system. A quantum computation system 300 is, for example, a computer system that performs computation by using principles of quantum mechanics. The quantum computation system 300 includes a quantum computation support apparatus 100, a quantum computer 200, and a classical computation system 310. The quantum computation support apparatus 100 is a classical computer that performs quantum computation support processing such as optimization of a quantum circuit for quantum computation. The classical computer is also referred to as a von Neumann computer. The quantum computer 200 is a non-von Neumann computer of a quantum gate type that applies quantum gates to qubits to perform quantum computation. The classical computation system 310 is a computation system that has a plurality of processors that perform computation by using classical bits representing either a state of "0" or a state of "1". The classical computation system 310 is, for example, implemented by a plurality of classical computers.

A terminal device 400 is connected to the quantum computation support apparatus 100 through a network 20. The terminal device 400 is a computer used by a user who requests quantum computation performed by the quantum computation system 300. The quantum computation support apparatus 100 receives, for example, a quantum computation request including a quantum circuit from the terminal device 400. The quantum circuit is a quantum computation model indicating an order of gate operations on qubits by an arrangement of elements such as quantum gates. The qubit is a bit capable of representing a superposition of the states "0" and "1".

The quantum computation support apparatus 100 instructs the quantum computer 200 to perform gate operations on qubits in accordance with the quantum computation request received from the terminal device 400. The quantum computation support apparatus 100 also acquires measurement results of the qubits from the quantum computer 200.

The quantum computer 200 performs gate operations on the qubits in accordance with instructions from the quantum computation support apparatus 100. The quantum computer 200 also measures states of qubits and transmits measurement results to the quantum computation support apparatus 100.

The quantum computation support apparatus 100 executes post-processing of computation results of the quantum circuit by the classical computation system 310. For example, the quantum computation support apparatus 100 transmits a request to execute post-processing to the classical computation system 310. The classical computation system 310 executes the post-processing, for example, in parallel by using a plurality of processors or a plurality of processor cores. The classical computation system 310 transmits the computation result of the post-processing to the quantum computation support apparatus 100.

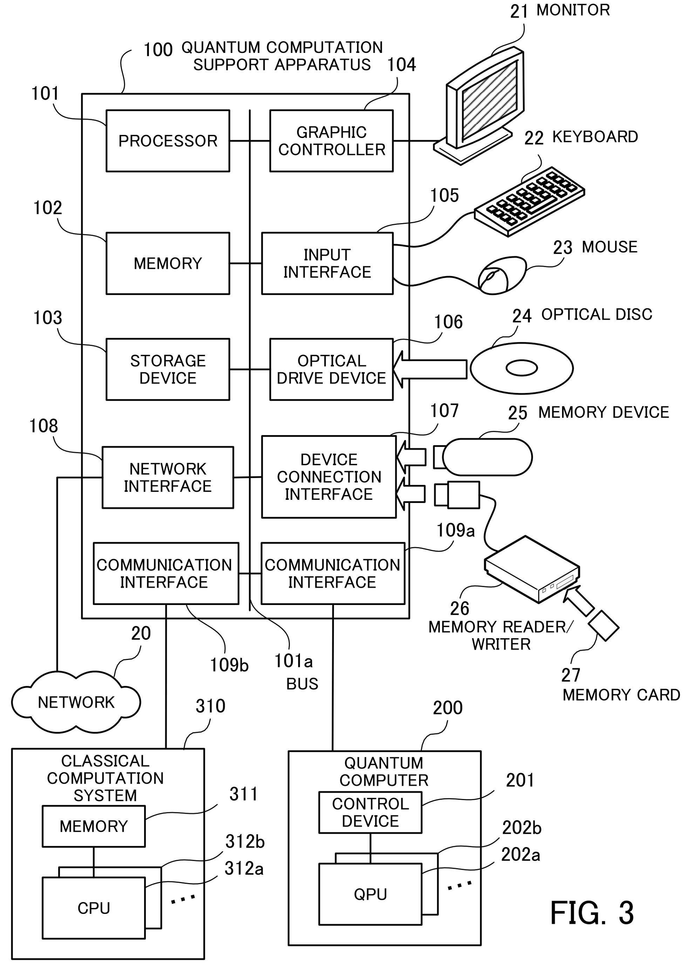

FIG. 3 illustrates an example of hardware configurations of devices included in a quantum computation system. The quantum computation support apparatus 100 is controlled as a whole by a processor 101. A memory 102 and a plurality of peripheral devices are connected to the processor 101 via a bus 101a.

The quantum computation support apparatus 100 may be a multiprocessor system having a plurality of processors. A group of the plurality of processors in the multiprocessor system may be referred to as the processor 101. The processor 101 may also be referred to as processor circuitry. Each of the plurality of processors executes a part or all of multiple processes executed in the quantum computation support apparatus 100. When there is a plurality of related processes, two or more of the plurality of processes may be executed by different processors.

The processor 101 is, for example, a central processing unit (CPU), a micro processing unit (MPU), or a digital signal processor (DSP). At least a part of functions realized by executing a program by the processor 101 may be implemented by an electronic circuit such as an application specific integrated circuit (ASIC) or a programmable logic device (PLD).

The memory 102 is used as a main storage device of the quantum computation support apparatus 100. At least a part of an operating system (OS) program or an application program to be executed by the processor 101 is temporarily stored in the memory 102. Various data used for processing by the processor 101 are also stored in the memory 102. As the memory 102, for example, a volatile semiconductor memory device such as a random access memory (RAM) is used.

Peripheral devices connected to the bus 101a include a storage device 103, a graphic controller 104, an input interface 105, an optical drive device 106, a device connection interface 107, a network interface 108, and communication interfaces 109a and 109b.

The storage device 103 performs electrical or magnetic writing and reading of data to and from a built-in recording medium. The storage device 103 is used as an auxiliary storage device of the quantum computation support apparatus 100. An OS program, an application program, and various data are stored in the storage device 103. As the storage device 103, for example, a hard disk drive (HDD) or a solid state drive (SSD) is used.

The graphic controller 104 is an arithmetic device that performs image processing. The graphic controller 104 is, for example, a graphics processing unit (GPU). A monitor 21 is connected to the graphic controller 104. The graphic controller 104 displays an image on a screen of the monitor 21 according to an instruction from the processor 101. Examples of the monitor 21 include a display device using electro luminescence (EL) or a liquid crystal display device. When, for example, a GPU is used as the graphic controller 104, the graphic controller 104 also performs complex numerical computations such as matrix computation.

A keyboard 22 and a mouse 23 are connected to an input interface 105. The input interface 105 transmits signals from the keyboard 22 and the mouse 23 to the processor 101. The mouse 23 is an example of a pointing device, and other pointing devices may also be used. Examples of other pointing devices include a touch panel, a tablet, a touch pad, and a trackball.

An optical drive device 106 reads data recorded on an optical disc 24 or writes data to the optical disc 24 by using laser light. The optical disc 24 is a portable recording medium on which data are recorded so as to be readable by reflection of light. Examples of the optical disc 24 include a digital versatile disc (DVD), a DVD-RAM, a compact disc read only memory (CD-ROM), a CD-recordable (CD-R), and a CD-rewritable (CD-RW).

A device connection interface 107 is a communication interface for connecting peripheral devices to the quantum computation support apparatus 100. For example, a memory device 25 and a memory reader/writer 26 are connectable to the device connection interface 107. The memory device 25 is a recording medium having a communication function with the device connection interface 107. The memory reader/writer 26 writes data to or reads data from a memory card 27. The memory card 27 is a card-type recording medium.

The network interface 108 is connected to the network 20. The network interface 108 transmits and receives data to and from another computer or a communication device via the network 20. The network interface 108 is, for example, a wired communication interface that is connected by a cable to a wired communication device such as a switch or a router. The network interface 108 may also be a wireless communication interface that is connected by radio waves to a wireless communication device such as a base station or an access point.

A communication interface 109a is connected to a quantum computer 200 and communicates with the quantum computer 200. The communication interface 109a transmits, for example, a quantum gate operation command based on a quantum circuit to the quantum computer 200. The communication interface 109a also receives a result of execution of the quantum circuit from the quantum computer 200.

A communication interface 109b is connected to the classical computation system 310 and communicates with the classical computation system 310. The communication interface 109b transmits, for example, a computation instruction for post-processing to the classical computation system 310. The communication interface 109b also receives a computation result of post-processing from the classical computation system 310.

The quantum computation support apparatus 100 realizes processing functions of the second embodiment by the hardware described above. The information processing apparatus 10 described in the first embodiment is also realizable by hardware similar to that of the quantum computation support apparatus 100 illustrated in FIG. 3.

The quantum computation support apparatus 100 realizes the processing functions of the second embodiment by executing a program recorded in a computer-readable recording medium. A program describing processing contents to be executed by the quantum computation support apparatus 100 is recordable in various recording media. For example, a program to be executed by the quantum computation support apparatus 100 is storable in a storage device 103. The processor 101 loads at least a part of the program stored in the storage device 103 into the memory 102 and executes the program. The program to be executed by the quantum computation support apparatus 100 may also be recorded in portable recording media such as the optical disc 24, the memory device 25, or the memory card 27. A program stored in a portable recording medium becomes executable, for example, after being installed in the storage device 103 under control of the processor 101. The processor 101 may also read and execute the program directly from the portable recording medium.

The quantum computer 200 includes a control device 201 and QPUs 202a, 202b, and so on. The control device 201 executes a gate operation on qubits in the QPUs 202a, 202b, and so on in accordance with an instruction from the quantum computation support apparatus 100. For example, the control device 201 performs the gate operation on the qubits by irradiating the qubits with a microwave having a predetermined frequency.

Each of the QPUs 202a, 202b, and so on includes a plurality of qubits. The QPUs 202a, 202b, and so on include, for example, qubits of a superconducting type, an ion-trap type, or a cold-atom type. The QPUs 202a, 202b, and so on may also be referred to as quantum processors or qubit devices.

The classical computation system 310 includes a memory 311 and a plurality of CPUs 312a, 312b, and so on. The memory 311 stores data and computation results used for classical computation. The CPUs 312a, 312b, and so on perform classical computation using classical bits in accordance with a request from the quantum computation support apparatus 100. The CPUs 312a, 312b, and so on transmit computation results to the quantum computation support apparatus 100.

A user who utilizes the quantum computation system 300 generates, by using the terminal device 400, a quantum circuit for solving a problem to be solved by quantum computation. When the user instructs execution of the quantum computation by the terminal device 400, a quantum computation request including the generated quantum circuit is transmitted from the terminal device 400 to the quantum computation system 300.

In the quantum computation system 300, the quantum computation support apparatus 100 causes the quantum computer 200 to execute quantum computation based on a quantum circuit in response to the quantum computation request. At this time, the quantum computation support apparatus 100 divides a quantum circuit to be executed in accordance with hardware specifications of the quantum computer 200, such as the number of the QPUs 202a, 202b, and so on, and the number of qubits available in each of the QPUs 202a, 202b, and so on.

When a quantum circuit is divided into subcircuits, increasing the number of the subcircuits improves fidelity, but extends time needed for post-processing. On the other hand, if the number of subcircuits is too small, a situation occurs where the circuit scale is too large to be executed by any QPU or fidelity fails to satisfy an expected quality level. Therefore, when dividing the quantum circuit, the quantum computation support apparatus 100 of the quantum computation system 300 divides the quantum circuit so that time needed for post-processing is shortened within a range where fidelity satisfies the expected quality level.

For example, when an original quantum circuit is divided at "K" positions (where K is a natural number) and "$n_c$" subcircuits (where $n_c$ is an integer of two or more) are generated, a subcircuit including a portion after a division position is executed with a state of a qubit at the division position remaining unknown. Therefore, for a subcircuit including a portion before the division position, each of a plurality of basis transformations "I", "X", "Y", and "Z" is performed at a terminal portion corresponding to the division position, and a probability amplitude after the basis transformation is measured. Accordingly, a plurality of executable subcircuits is generated by adding different basis transformation circuits to the subcircuit including the portion before the division position.

In the basis transformation circuit, a basis transformation corresponding to a basis to be measured is performed. The basis transformations are represented by the following Pauli operators as indicated in Expression (1).

$$ I = \begin{pmatrix} 1 & 0 \\ 0 & 1 \end{pmatrix}, X = \begin{pmatrix} 0 & 1 \\ 1 & 0 \end{pmatrix}, Y = \begin{pmatrix} 0 & -i \\ i & 0 \end{pmatrix}, Z = \begin{pmatrix} 1 & 0 \\ 0 & -1 \end{pmatrix} \qquad (1) $$

Among the basis transformations "I", "X", "Y", and "Z", "I" is an identity basis, and therefore, no basis transformation is needed.

For a subcircuit including a portion after a division position, an initial value of a qubit at a start end corresponding to the division position is unknown. Therefore, a plurality of initial values is set at the start end, and the subcircuit is executed a plurality of times with different initial values.

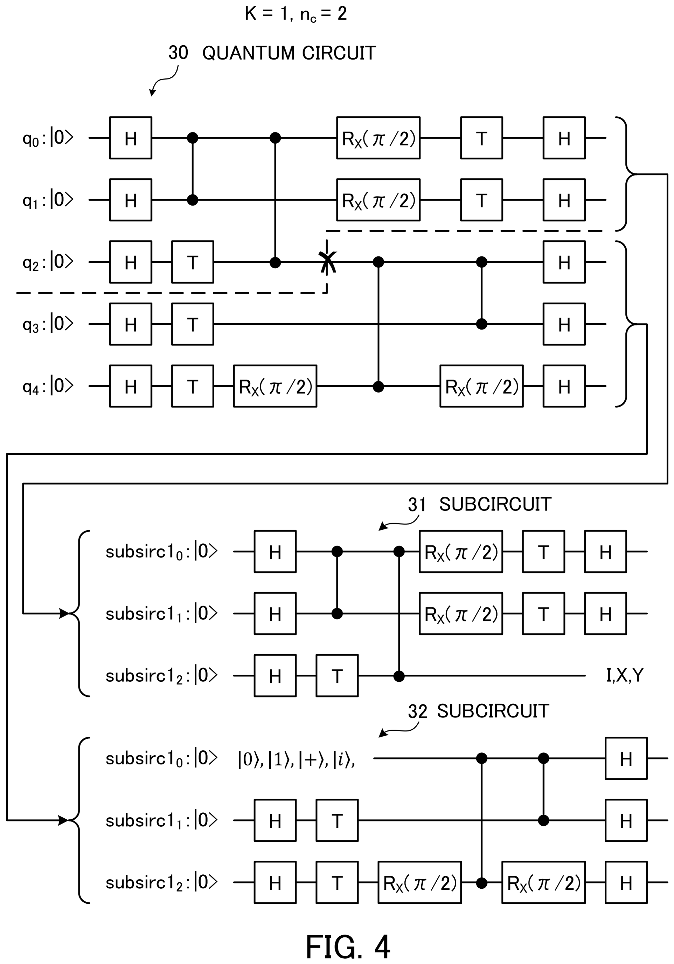

FIG. 4 illustrates a first example of subcircuits generated by dividing a quantum circuit. A quantum circuit 30 is divided into two subcircuits 31 and 32 ($n_c = 2$) by dividing the third qubit line of the quantum circuit 30 at one gate operation position (K = 1). In the example of FIG. 4, the subcircuit 31 is repeatedly executed by adding different basis transformation circuits in order to obtain probability amplitudes after each of the basis transformations "I", "X", and "Y" for the third qubit. Note that the basis "Z" may also be included as a target of the basis transformation.

In the original quantum circuit 30, the output of the third qubit of the subcircuit 31 serves as the input of the first qubit of the subcircuit 32. As a result of dividing the quantum circuit 30 into the plurality of subcircuits 31 and 32, the input state of the first qubit of the subcircuit 32 is not determined. Therefore, the subcircuit 32 is repeatedly executed while setting the initial value of the first qubit to each of "$|0\rangle$", "$|1\rangle$", "$|+\rangle$", and "$|i\rangle$". When executing the subcircuit 32, an initialization circuit for setting the first qubit to a predetermined initial value is added to the subcircuit 32.

For the subcircuits 31 and 32, four combinations of quantum computations are generated based on the basis transformations and the initial values. For each combination, a tensor product of computation results is obtained through classical computation. For example, a combination is formed by the quantum computation of the subcircuit 31 accompanied by the basis transformation "I" and the quantum computation of the subcircuit 32 with the initial value "$|0\rangle$". Another combination is formed by the quantum computation of the subcircuit 31 accompanied by the basis transformation "Z" and the quantum computation of the subcircuit 32 with the initial value "$|1\rangle$". Another combination is formed by the quantum computation of the subcircuit 31 accompanied by the basis transformation "X" and the quantum computation of the subcircuit 32 with the initial value "$|+\rangle$". Another combination is formed by the quantum computation of the subcircuit 31 accompanied by the basis transformation "Y"

and the quantum computation of the subcircuit 32 with the initial value "$|i\rangle$".

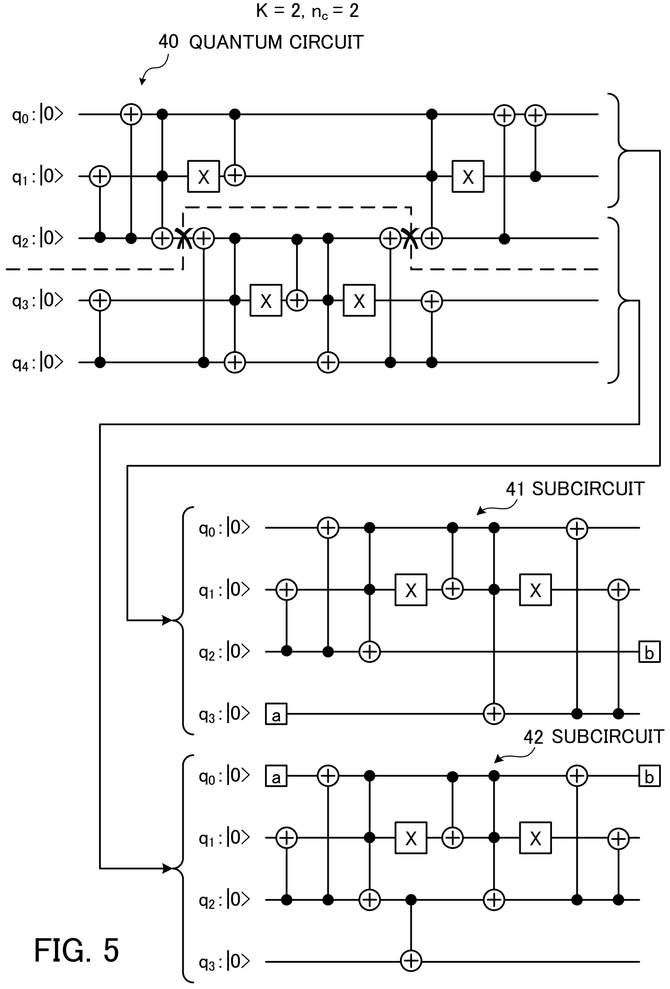

FIG. 5 illustrates a second example of subcircuits generated by dividing a quantum circuit. A quantum circuit 40 is divided into two subcircuits 41 and 42 ($n_c = 2$) by dividing the fourth qubit line of the quantum circuit 40 at two gate-operation positions (K = 2). In the example illustrated in FIG. 5, since the division is performed at two positions on a line representing a gate operation for a single qubit, there are two division positions, but the number of subcircuits is "2".

Sixteen combinations of the initial value "a" and the basis transformation "b" in the subcircuits 41 and 42 are as follows:

$$ (a, b) = (|0\rangle, I), (|1\rangle, I), (|+\rangle, I), (|i\rangle, I), $$
$$ (|0\rangle, X), (|1\rangle, X), (|+\rangle, X), (|i\rangle, X), $$
$$ (|0\rangle, Y), (|1\rangle, Y), (|+\rangle, Y), (|i\rangle, Y), $$
$$ (|0\rangle, Z), (|1\rangle, Z), (|+\rangle, Z), (|i\rangle, Z). $$

The probability amplitude "P" of the output value after execution of the quantum circuits 30 and 40 illustrated in FIGS. 4 and 5 is obtained by the classical computation indicated in Expression (2), based on the probability amplitudes "$p_{i,k}$" obtained as execution results of the subcircuits 31, 32, 41, and 42.

$$P = \sum_{k=1}^{4^K} \otimes_{i=1}^{n_c} p_{i,k} \in \mathbb{R}^{2^n} \qquad (2)$$

The symbol i represents the index (natural number) of each subcircuit, and the symbol k represents the index (natural number) of each combination of the initial value and the basis transformation. As indicated in Expression (2), the probability amplitude "P" of each qubit after execution of the original quantum circuit is calculated by the tensor products of the execution results of the subcircuits for each combination of the initial value and the basis transformation, and by summing the tensor products.

The computation for reconstructing the probability amplitude indicated in Expression (2) is a classical computation and is executed by the quantum computation support apparatus 100 or by the classical computation system 310. The classical computation performed using the execution results of quantum computation may be referred to as post-processing.

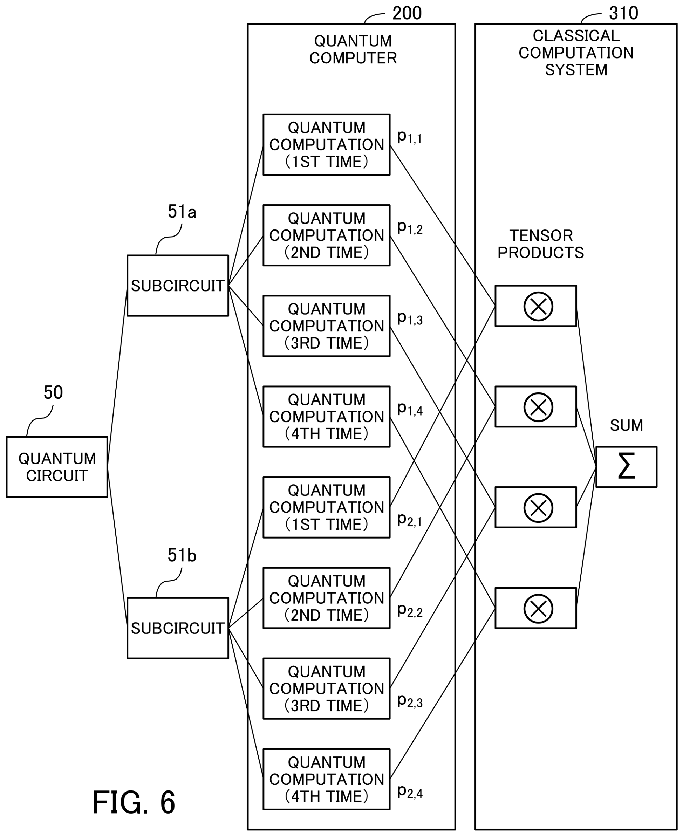

FIG. 6 illustrates an example of a process for calculating probability amplitudes by using classical computation. For example, it is assumed that a quantum circuit 50 is divided at one position (K = 1), and two subcircuits 51a and 51b are generated ($n_c = 2$). In this case, the quantum computer 200 executes quantum computation four times in accordance with the subcircuit 51a. The quantum computer 200 also executes quantum computation four times in accordance with the subcircuit 51b. The quantum computer 200 may also execute, in parallel, quantum computations to be performed based on the subcircuits 51a and 51b by using the plurality of QPUs 202a, 202b, and so on.

The classical computation system 310 calculates tensor products based on the results of the quantum computations. For example, the classical computation system 310 calculates a tensor product of the probability amplitude "$p_{1,1}$" obtained by the first quantum computation based on the subcircuit 51a and the probability amplitude "$p_{2,1}$" obtained by the first quantum computation based on the subcircuit 51b. The classical computation system 310 calculates a tensor product of the probability amplitude "$p_{1,2}$" obtained by the second quantum computation based on the subcircuit 51a and the probability amplitude "$p_{2,2}$" obtained by the second quantum computation based on the subcircuit 51b. The classical computation system 310 calculates a tensor product of the probability amplitude "$p_{1,3}$" obtained by the third quantum computation based on the subcircuit 51a and the probability amplitude "$p_{2,3}$" obtained by the third quantum computation based on the subcircuit 51b. Furthermore, the classical computation system 310 calculates a tensor product of the probability amplitude "$p_{1,4}$" obtained by the fourth quantum computation based on the subcircuit 51a and the probability amplitude "$p_{2,4}$" obtained by the fourth quantum computation based on the subcircuit 51b.

The classical computation system 310 calculates a sum of the results of the four tensor product computations. In this way, the probability amplitude for a predetermined observable in the quantum circuit 50 before division is obtained.

Among such computations, the computational complexity of the tensor-product calculation increases as $O(4^K)$ with respect to the number of divisions K. Therefore, as the number of divisions increases, the amount of classical computation for calculating tensor products becomes prolonged. On the other hand, when the scale of the subcircuits generated by the division is large, each subcircuit is executed on a large-scale quantum computer with low fidelity. As a result, the calculation accuracy decreases.

Accordingly, a method for appropriately dividing a quantum circuit has been considered.

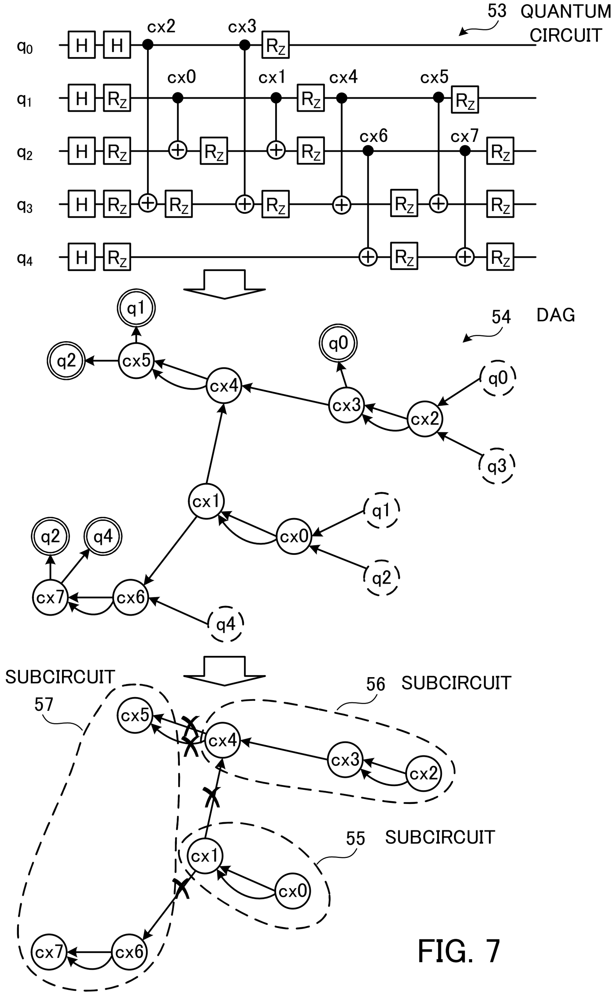

FIG. 7 illustrates an example of a method for dividing a quantum circuit. One example of a method for dividing a quantum circuit 53 is CutQC (see the above-mentioned literature "CutQC: Using Small Quantum Computers for Large Quantum Circuit Evaluations"). In CutQC, the quantum circuit 53 is transformed into a directed acyclic graph (DAG) 54. Based on the DAG 54, a mixed-integer or integer programming problem is generated, in which the computational cost of post-processing is used as the objective function. The mixed-integer programming problem and the integer programming problem are types of optimization problems in mathematical optimization. In CutQC, the cut positions are determined by solving the optimization problem based on the DAG 54.

For example, the quantum circuit 53 includes gate operations using five qubits ($q_0$ to $q_4$). The two-qubit gates included in the quantum circuit 53 are eight CNOT gates (cx0 to cx7). The DAG 54 includes input-state vertices (dashed circles) indicating input states of qubits, output-state vertices (double-line circles) indicating output states of qubits, and gate-operation vertices (solid circles) indicating two-qubit gates.

In the DAG 54, an edge (arrow) is provided from an input-state vertex of a qubit to the gate-operation vertex of the first two-qubit gate that performs a gate operation on the qubit. In addition, in the DAG 54, an edge is provided from a gate-operation vertex of a two-qubit gate to the gate-operation vertex of the next two-qubit gate that performs a gate operation on the qubit operated by the preceding two-qubit gate. The edges are provided for each target qubit of the operation. When the next two-qubit gate performs a gate operation on both qubits operated by a certain two-qubit gate, the two two-qubit gates are connected by two edges. Furthermore, in the DAG 54, an edge is provided from a gate-operation vertex of a two-qubit gate to an output-state vertex of a qubit on which no further two-qubit gate operation is performed thereafter.

The edges of the DAG 54 correspond to line segments obtained by dividing the horizontal lines corresponding to each qubit in the quantum circuit 53 at the positions of two-qubit gates. By solving the optimization problem for determining the appropriate cut positions in the DAG 54, one or more edges in the DAG 54 are selected as cut targets. In the example illustrated in FIG. 7, four edges are selected as cut targets. By bisecting each line segment in the quantum circuit 53 corresponding to the cut-target edges, the quantum circuit 53 is divided into a plurality of subcircuits 55 to 57.

The subcircuit 55 is a quantum circuit including two CNOT gates (cx0 and cx1). The subcircuit 56 is a quantum circuit including three CNOT gates (cx2 to cx4). The subcircuit 57 is a quantum circuit including three CNOT gates (cx5 to cx7).

In the optimization problem for determining the cut positions of the DAG 54 corresponding to the quantum circuit 53, the number of qubits available in the QPU may be set as a constraint condition, for example. The cut positions that satisfy the constraint condition with the smallest possible number of cuts are obtained as a solution.

When the quantum circuit is divided by CutQC in this manner, there is a possibility that the execution time or fidelity of the generated subcircuits will not meet expectations. The execution time of each subcircuit depends, for example, on the load of the QPU that executes the subcircuit.

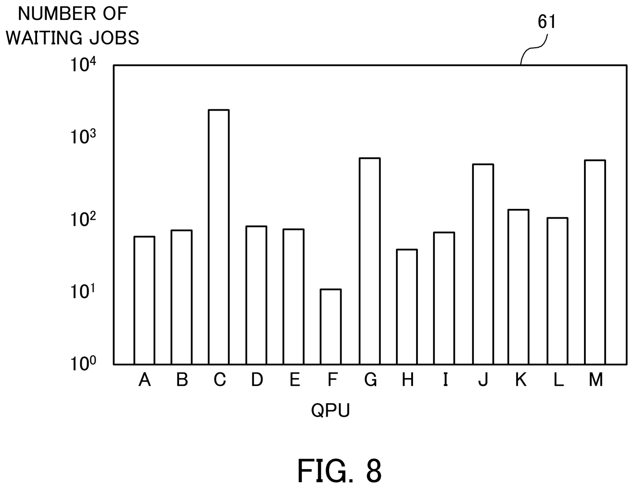

FIG. 8 illustrates an example of the loads of each QPU. A graph 61 represents the number of waiting jobs for each of multiple QPUs during a given period. In the graph 61, the horizontal axis represents the QPUs and the vertical axis represents the number of waiting jobs. As illustrated in the graph 61, the number of waiting jobs differs among QPUs. The number of waiting jobs for each QPU depends on the load of the QPU. The greater the number of waiting jobs in a QPU, the longer the time needed until the execution of a subcircuit on that QPU is completed.

The fidelity of each subcircuit depends, for example, on the fidelity of the QPU that executes the subcircuit.

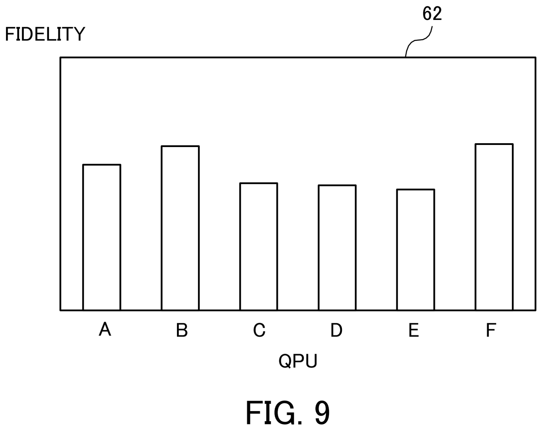

FIG. 9 illustrates an example of the fidelity of each QPU. A graph 62 represents the fidelity of each of multiple QPUs. In the graph 62, the horizontal axis represents the QPUs, and the vertical axis represents the fidelity. As illustrated in the graph 62, the fidelity differs among QPUs. The fidelity of a subcircuit executed on a QPU having low fidelity is low, while the fidelity of a subcircuit executed on a QPU having high fidelity is high.

As described above, even if the quantum circuit 53 is divided into appropriate multiple subcircuits based on the DAG 54, the completion times of the respective subcircuit computations differ depending on the load or performance of the QPUs executing the subcircuits. In order for the classical computation system 310 to perform post-processing using the computation results of multiple subcircuits as illustrated in FIG. 6, completion of the quantum computation of each subcircuit is assumed. Therefore, if the time until the completion of the quantum computation of a part of the subcircuits becomes long, the calculation of the final probability amplitudes is delayed. In addition, if the fidelity of the quantum computation of some subcircuits is low, the accuracy of the final probability amplitudes obtained also decreases.

Accordingly, in the quantum computation system 300, the quantum circuit is divided and the quantum computation is executed while taking into account the execution time of each subcircuit according to the load of the QPU and the fidelity of each subcircuit according to the fidelity of the QPU.

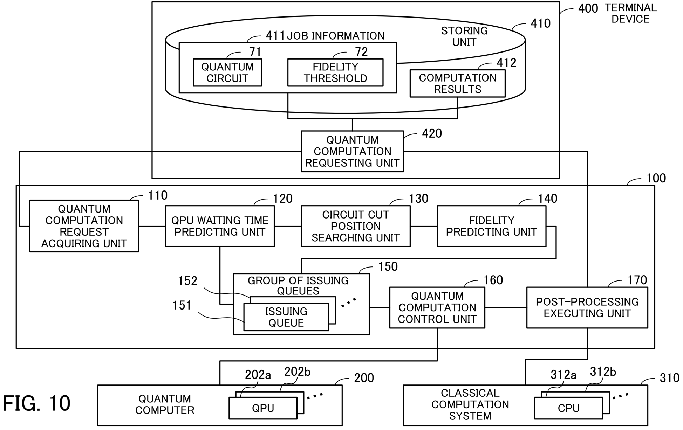

FIG. 10 is a block diagram illustrating an example of the functions of the respective apparatuses in the second embodiment. The terminal device 400 includes a storing unit 410 and a quantum computation requesting unit 420. The storing unit 410 stores job information 411 indicating the contents of quantum computation and computation results 412. The job information 411 includes information such as a quantum circuit 71 and a fidelity threshold 72. The quantum circuit 71 is a quantum computation model in which the procedure for obtaining a solution to a target problem by quantum computation is represented by quantum gates. The fidelity threshold 72 is a threshold value of fidelity to be satisfied by each of multiple subcircuits obtained by dividing the quantum circuit 71.

The quantum computation requesting unit 420 transmits a quantum computation request based on the job information 411 to the quantum computation support apparatus 100. When the quantum computation requesting unit 420 receives the quantum computation results from the quantum computation support apparatus 100, the quantum computation requesting unit 420 stores the computation results 412 in the storing unit 410.

The quantum computation support apparatus 100 includes a quantum computation request acquiring unit 110, a QPU waiting time predicting unit 120, a circuit cut position searching unit 130, a fidelity predicting unit 140, a group of issuing queues 150, a quantum computation control unit 160, and a post-processing executing unit 170.

The quantum computation request acquiring unit 110 acquires a quantum computation request including the job information 411 from the terminal device 400. When the quantum computation request acquiring unit 110 acquires the quantum computation request, the quantum computation request acquiring unit 110 transmits the job information 411 to the QPU waiting time predicting unit 120.

The QPU waiting time predicting unit 120 predicts waiting times of the respective QPUs 202a, 202b, and so on, in the quantum computer 200. For example, the QPU waiting time predicting unit 120 calculates, based on information of jobs registered in issuing queues 151, 152, and so on, the waiting time until the start of execution of a newly registered job for each of the QPUs 202a, 202b, and so on. Based on the predicted waiting times of the respective QPUs 202a, 202b, and so on, the QPU waiting time predicting unit 120 performs tentative assignment of each subcircuit obtained by division to one of the QPUs. The QPU waiting time predicting unit 120 transmits information indicating which QPUs serve as tentative assignment destinations to the circuit cut position searching unit 130.

The circuit cut position searching unit 130 searches for cut positions for dividing the quantum circuit 71. For example, the circuit cut position searching unit 130 generates a mixed-integer programming problem or an integer programming problem for searching for the cut positions based on the information of the QPUs serving as tentative assignment destinations, and searches for a solution to the generated problem.

The circuit cut position searching unit 130 divides the quantum circuit 71 at the cut positions obtained from the solution search and generates multiple subcircuits. The circuit cut position searching unit 130 transmits information indicating the generated subcircuits to the fidelity predicting unit 140.

The fidelity predicting unit 140 predicts the fidelity when the subcircuits are executed. The fidelity predicting unit 140 includes QPU information indicating the QPUs 202a, 202b, and so on, in the quantum computer 200. For example, the fidelity predicting unit 140 allocates each subcircuit to a corresponding QPU for execution. The fidelity predicting unit 140 calculates the fidelity based on information such as the error rate of the allocated QPU and the number of gates of each subcircuit. The fidelity predicting unit 140 compares the fidelity obtained by the calculation with the fidelity threshold 72. For example, when the fidelity of at least one of the subcircuits is equal to or lower than the fidelity threshold 72, the fidelity predicting unit 140 requests the circuit cut position searching unit 130 to perform another search for the cut positions. When the fidelities of all the subcircuits exceed the fidelity threshold 72, the fidelity predicting unit 140 registers jobs for executing the respective subcircuits in the corresponding issuing queues.

The group of issuing queues 150 is a set of job queues each corresponding to one of the QPUs 202a, 202b, and so on, of the quantum computer 200.

The quantum computation control unit 160 sequentially retrieves jobs registered in the issuing queues 151, 152, and so on, and instructs the quantum computer 200 to execute quantum computation corresponding to the jobs. At that time, the quantum computation control unit 160 specifies the QPU that executes each job. The quantum computation control unit 160 acquires computation results from the quantum computer 200 and transmits the computation results to the post-processing executing unit 170.

When the execution results of multiple subcircuits corresponding to combinations of initial values and basis transformations are obtained, the post-processing executing unit 170 calculates tensor products of the execution results. When the tensor products for all combinations of initial values and basis transformations have been obtained, the post-processing executing unit 170 calculates the sum of the tensor products and outputs the results as the quantum computation results. The post-processing executing unit 170 transmits the quantum computation results to the terminal device 400.

The post-processing executing unit 170 may cause at least a part of the series of classical computations for obtaining the quantum computation results to be executed by the classical computation system 310. For example, the post-processing executing unit 170 causes the classical computation system 310 to execute, in parallel, the tensor product computations. For example, the classical computation system 310 executes, in parallel, multiple tensor product computations by using two or more CPUs 312a, 312b, and so on.

The functions of each element in the terminal device 400 or the quantum computation support apparatus 100 illustrated in FIG. 10 may be implemented, for example, by causing the processor 101 to execute a program module corresponding to each element.

By means of the quantum computation support apparatus 100 having the functions described above, the quantum circuit 71 is divided at appropriate cut positions in account the waiting times and fidelities of the QPUs 202a, 202b, and so on, and the subcircuits generated by the division are executed.

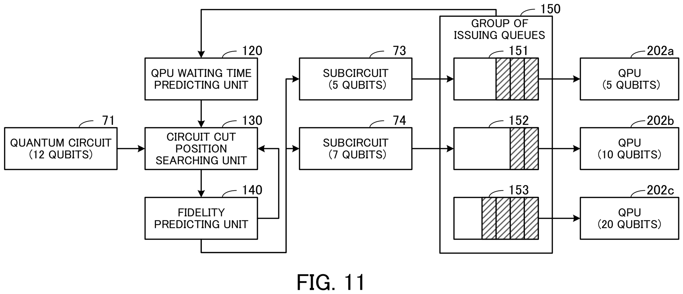

FIG. 11 illustrates an example of a process of dividing a quantum circuit in the quantum computation support apparatus. For example, it is assumed that the number of qubits to be subjected to gate operations in the quantum circuit 71 is twelve. Three QPUs 202a to 202c are available for use. The number of qubits of the QPU 202a is five, that of the QPU 202b is ten, and that of the QPU 202c is twenty. Three jobs are registered in the issuing queue 151 of the QPU 202a. Two jobs are registered in the issuing queue 152 of the QPU 202b, and four jobs are registered in the issuing queue 153 of the QPU 202c.

The QPU waiting time predicting unit 120 predicts the waiting times of the respective QPUs 202a, 202b, and 202c. For example, the greater the number of jobs registered in the corresponding issuing queue, the longer the waiting time becomes. In the example illustrated in FIG. 11, the waiting times are assumed to be shortest to longest in the order of the QPU 202b, the QPU 202a, and the QPU 202c.

The circuit cut position searching unit 130 tentatively assigns a predetermined number of subcircuits in order from QPUs having shorter waiting times. In the example illustrated in FIG. 11, the initial number of subcircuits is two. In this case, tentative assignment is performed to the two QPUs 202a and 202b in order from those having shorter waiting times.

The circuit cut position searching unit 130 constrains the sizes (numbers of qubits to be operated on) of the subcircuits according to the sizes (numbers of qubits) of the QPUs 202a and 202b that are tentatively assigned. The circuit cut position searching unit 130 determines the cut positions of the quantum circuit 71, for example, by solving a mixed integer programming problem.

The fidelity predicting unit 140 predicts whether each subcircuit satisfies a desired fidelity. For example, the fidelity predicting unit 140 calculates the fidelity of each subcircuit based on information such as the number of qubits of the subcircuit and the error rates of the QPUs 202a and 202b assigned to the subcircuits. When the fidelity of a subcircuit calculated by the fidelity predicting unit 140 is equal to or greater than the fidelity threshold 72, the fidelity predicting unit 140 determines that the subcircuit satisfies the desired fidelity.

For example, when at least one subcircuit does not satisfy the desired fidelity, the circuit cut position searching unit 130 relaxes the constraint by increasing the number of subcircuits to be generated. The circuit cut position searching unit 130 then performs the tentative assignment of the subcircuits to the QPUs and the cut position search again. At this time, the cut positions are determined so that the subcircuits 73 and 74 have sizes not exceeding the numbers of qubits of the tentatively assigned QPUs 202a and 202b, respectively.

When the fidelities satisfy the desired condition, the fidelity predicting unit 140 allocates the subcircuits 73 and 74 to the tentatively assigned QPUs 202a and 202b. For example, the subcircuit 73 that operates on five qubits is allocated to the QPU 202a, and the subcircuit 74 that operates on seven qubits is allocated to the QPU 202b.

In this case, the subcircuits 73 and 74 are executed by the QPUs 202a and 202b, respectively, and post-processing is performed using the results thereof.

Next, a specific example of a method for predicting the waiting time of a QPU will be described.

For example, the QPU waiting time predicting unit 120 predicts the execution time for each job (waiting job) registered in the issuing queue corresponding to the QPU that is the prediction target. The QPU waiting time predicting unit 120 identifies the longest path of the quantum circuit to be executed by each job. The longest path is, for example, a sequence of quantum gates having the longest execution time among groups of quantum gates that are executable simultaneously. The QPU waiting time predicting unit 120 defines the total execution time of the quantum gates included in the longest path as the execution time of the quantum circuit. The QPU waiting time predicting unit 120 calculates the total of the execution times of the quantum circuits to be executed by the respective jobs registered in the issuing queue corresponding to the QPU as the predicted waiting time of the QPU.

The QPU waiting time predicting unit 120 compares the predicted waiting times of the respective QPUs and determines the QPUs as tentative assignment destinations in order from those having shorter predicted waiting times. Each time a tentative assignment destination QPU is determined, the QPU waiting time predicting unit 120 calculates the sum of the numbers of qubits of the tentatively assigned QPUs. The QPU waiting time predicting unit 120 repeats the determination of tentative assignment destinations until the total number of qubits of the tentatively assigned QPUs becomes equal to or greater than the number of qubits of the quantum circuit 71 indicated in the quantum computation request.

The QPU waiting time predicting unit 120 sets, as an initial value of the number of subcircuits $n_c$, the number of QPUs determined as tentative assignment destinations when the total number of qubits of the tentatively assigned QPUs becomes equal to or greater than the number of qubits of the quantum circuit 71 indicated in the quantum computation request.

After the tentative assignment of the QPUs, the circuit cut position searching unit 130 selects cut positions of the input quantum circuit 71. The circuit cut position searching unit 130 first generates a DAG based on the input quantum circuit 71.

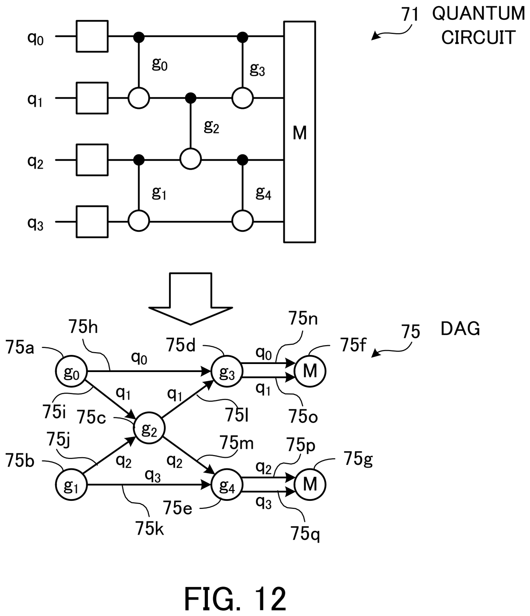

FIG. 12 illustrates an example of a DAG corresponding to a quantum circuit. For example, the targets of operation in the quantum circuit 71 are four qubits $q_0$ to $q_3$. The quantum circuit 71 includes five two-qubit gates $g_0$ to $g_4$. Based on the quantum circuit 71, a DAG 75 is generated.

The DAG 75 includes vertices 75a to 75e corresponding to the respective two-qubit gates. The DAG 75 also includes vertices 75f and 75g indicating measurement.

In the quantum circuit 71, the control qubit of the two-qubit gate $g_0$ is the qubit $q_0$. The qubit $q_0$, after the gate operation of the two-qubit gate $g_0$, is used as the control qubit of the two-qubit gate $g_3$. Therefore, in the DAG 75, an edge 75h corresponding to the qubit $q_0$ is set from the vertex 75a corresponding to the two-qubit gate $g_0$ toward the vertex 75d corresponding to the two-qubit gate g3.

In the quantum circuit 71, the target qubit of the two-qubit gate $g_0$ is the qubit $q_1$. The qubit $q_1$, after the gate operation of the two-qubit gate $g_0$, is used as the control qubit of the two-qubit gate $g_2$. Therefore, in the DAG 75, an edge 75i corresponding to the qubit $q_1$ is set from the vertex 75a corresponding to the two-qubit gate $g_0$ toward the vertex 75c corresponding to the two-qubit gate $g_2$.

Similarly, other edges 75j to 75q are set in the DAG 75 corresponding to the respective line segments obtained by dividing the horizontal lines corresponding to the qubits of the quantum circuit 71 by the two-qubit gates. The circuit cut position searching unit 130 selects edges to be cut from among the edges 75h to 75q set in the generated DAG 75. For example, the circuit cut position searching unit 130 selects cut positions by solving an optimization problem (a mixed-integer programming problem or an integer programming problem).

When V represents a set of vertices of the DAG 75 and C represents a set of subcircuits, the optimization problem employs variables such as those below.

<Variables>

$$y_{v,c} \equiv \begin{cases} 1 & \text{vertex } v \text{ is included in subcircuit } c \\ 0 & \text{otherwise} \end{cases}, \forall v \in V, \forall c \in C \qquad (3)$$

The variable $y_{v,c}$ indicates whether a vertex v is included in a subcircuit c.

$$x_{e,c} \equiv \begin{cases} 1 & \text{edge } e \text{ is cut position to separate subcircuit } c \\ 0 & \text{otherwise} \end{cases}, \forall e \in E, \forall c \in C \qquad (4)$$

The variable $x_{e,c}$ indicates whether an edge e is a cut position to separate the subcircuit c.

$$\alpha_c \equiv \sum_{v \in V} w_v \times y_{eb,c}, \ \forall c \in C \qquad (5)$$

$w_v$ is a weight value preset for a vertex v. $\alpha_c$ represents the number of input qubits of the circuit before being divided to separate the subcircuit c.

$$\rho_c \equiv \sum_{e:(ea,eb) \in E} x_{e,c} \times y_{eb,c}, \ \forall c \in C \qquad (6)$$

$\rho_c$ represents the number of types of initial states added at the time of cutting to separate the subcircuit c.

$$O_c \equiv \sum_{e:(ea,eb) \in E} x_{e,c} \times y_{ea,c}, \ \forall c \in C \qquad (7)$$

$O_c$ represents the number of measurement nodes added at the time of cutting to separate the subcircuit c.

$$f_c \equiv \alpha_c + \rho_c - O_c, \forall c \in C \qquad (8)$$

$f_c$ represents the number of measurement nodes of the circuit before being divided to separate the subcircuit c.
The circuit cut position searching unit 130 defines constraints using the variables described above as follows.

<Constraints>

$$\sum_{c \in C} y_{v,c} = 1, \ \forall v \in V \qquad (9)$$

Expression (9) represents a constraint that all vertices belong to any one of the subcircuits.

$$d_c \equiv \alpha_c + \rho_c \leq Dc, \ \forall c \in C \qquad (10)$$

Expression (10) represents a constraint that the number of qubits of each subcircuit is equal to or less than the number D of qubits of the QPU to which the subcircuit is tentatively assigned.

$$x_{e,c} = y_{e_a,c} \oplus y_{e_b,c}, \ \forall e = (e_a, e_b) \in E, \ \forall c \in C \qquad (11)$$

Expression (11) represents a constraint that the vertices at both ends of an edge to be cut belong to different subcircuits.

$$\sum_{j \geq k+1}^{nc} y_{k,j} = 0, \ k = 1, \ \ldots, \ n_c \qquad (12)$$

Expression (12) represents a constraint that the first vertex belongs to the first subcircuit and the second vertex belongs to either the first or second subcircuit. Because of this constraint, cases in which the cut positions are identical but only the indices are interchanged are excluded. As a result, the search space is reduced and processing is made more efficient.

The objective function of the optimization problem is as follows.

<Objective Function>

$$K = \frac{1}{2} \sum_{c \in C} \sum_{e \in E} x_{e,c} \qquad (13)$$

$$minimize \ L \equiv 4^K \sum_{c=2}^{n_c} \prod_{i=1}^{c} 2^{f_i} \qquad (14)$$

K represents the number of cut positions (the number of cuts). The right side of Expression (14) represents the computational cost of post-processing. In other words, the optimization problem is a problem of searching for cut positions that minimize the computational cost of post-processing under the condition that the constraint equations are satisfied.

The circuit cut position searching unit 130 determines the cut positions by searching for a solution to the above optimization problem. By cutting the quantum circuit at the cut positions, a plurality of subcircuits is obtained. Each subcircuit is tentatively assigned to a QPU.

The fidelity predicting unit 140 calculates the fidelity of each subcircuit based on the subcircuit and the QPU assigned to the subcircuit. The fidelity is obtained by numerical computation using static parameters, for example, according to Expression (15).

$$fid = 1 - \prod_{i=0}^{N} e_{r(i)} e_{d(i)} \prod_{j=0}^{M} e_{g(j)} \prod_{j=0,k=0}^{M \times M} e_{ct(j,k)} \qquad (15)$$

$q_i$ represents the i-th qubit. $e_{r(i)}$ represents the measurement error rate of the i-th qubit. $e_{g(i)}$ represents the gate operation error rate of the i-th qubit. $e_{d(t)}$ represents the decoherence error rate, which may be obtained, for example, as $e_{d(t)} = 1 - e^{-t/T2}$. Here, t represents the elapsed time since an operation is performed on the qubit, and T2 represents a time constant indicating the time during which the superposition of the qubit collapses. $e_{ct(k,l)}$ represents the crosstalk error rate between the k-th quantum gate $g_k$ and the l-th quantum gate $g_l$. N represents the number of qubits operated on in the subcircuit, and M represents the number of quantum gates included in the subcircuit.

When the fidelity obtained by Expression (15) is equal to or greater than the fidelity threshold 72, a subcircuit obtained by cutting the quantum circuit 71 at the corresponding cut positions is generated.

Next, the procedure of the quantum computation support processing performed by the quantum computation support apparatus 100 that has received a quantum computation request is described in detail.

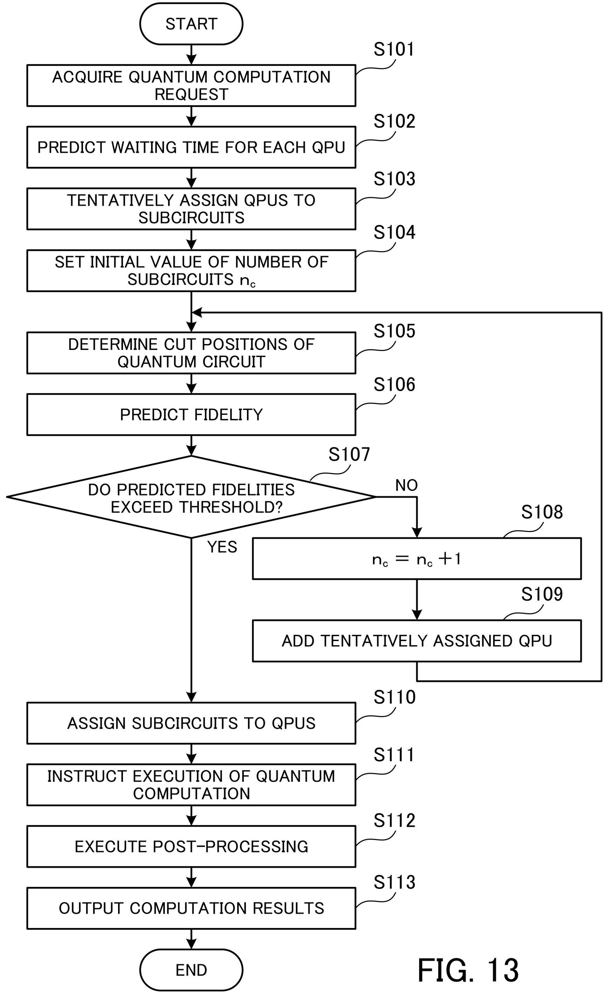

FIG. 13 is a flowchart illustrating an example of the procedure of quantum computation support processing according to the second embodiment. The processing illustrated in FIG. 13 is described below step by step in accordance with the step numbers.

[Step S101] The quantum computation request acquiring unit 110 acquires a quantum computation request including the job information 411.

[Step S102] The QPU waiting time predicting unit 120 predicts the waiting times of the respective QPUs 202a, 202b, and so on, included in the quantum computer 200. The waiting time of each QPU is, for example, the total execution time of jobs registered in the issuing queue corresponding to that QPU.

[Step S103] The QPU waiting time predicting unit 120 tentatively assigns the assignment destinations of subcircuits. For example, the QPU waiting time predicting unit 120 sets QPUs with shorter waiting times as the assignment destinations in order of ascending waiting time. The QPU waiting time predicting unit 120 terminates the tentative setting of new QPU assignment destinations when the total number of qubits of the QPUs tentatively set as assignment destinations reaches or exceeds the number of qubits of the quantum circuit to be executed.

[Step S104] The QPU waiting time predicting unit 120 sets the number of tentatively assigned QPUs as the initial value of the number of subcircuits $n_c$.

[Step S105] The circuit cut position searching unit 130 determines the cut positions of the quantum circuit indicated in the job information 411, using the number of qubits available in each assigned QPU as a constraint condition. For example, the circuit cut position searching unit 130 solves an optimization problem to determine cut positions such that, when the number of subcircuits is $n_c$, the computation cost of post-processing becomes minimal. The circuit cut position searching unit 130 cuts the quantum circuit at the determined positions to generate multiple subcircuits.

[Step S106] The fidelity predicting unit 140 predicts the fidelity when each of the generated subcircuits is executed by the corresponding QPU assigned as its destination. For example, the fidelity predicting unit 140 predicts the fidelity by numerical computation using variables such as the error rate of the assigned QPU and the number of quantum gates included in the subcircuit.

[Step S107] The fidelity predicting unit 140 determines whether the fidelities of all subcircuits exceed the fidelity threshold. When the fidelities of all subcircuits exceed the fidelity threshold, the fidelity predicting unit 140 proceeds to step S110. When the fidelity of at least one subcircuit is equal to or lower than the fidelity threshold, the fidelity predicting unit 140 proceeds to step S108.

[Step S108] The circuit cut position searching unit 130 increases the number of subcircuits $n_c$ by one $(n_c = n_c + 1)$.

[Step S109] The circuit cut position searching unit 130 adds one more QPU to the set of tentatively assigned QPUs. For example, the circuit cut position searching unit 130 sets, as a tentative assignment destination, a QPU having the shortest waiting time among those not yet tentatively assigned. The circuit cut position searching unit 130 then proceeds to step S105.

[Step S110] The fidelity predicting unit 140 assigns subcircuits to the tentatively assigned QPUs. For example, the fidelity predicting unit 140 registers, in the issuing queue corresponding to each QPU assigned as a destination, a job that instructs execution of the subcircuit.

[Step S111] The quantum computation control unit 160 instructs the quantum computer 200 to execute the subcircuits. For example, when the turn of a job corresponding to a subcircuit arrives, the quantum computation control unit 160 transmits to the quantum computer 200 an instruction for performing quantum computation using the QPU assigned to that subcircuit. The quantum computer 200 performs quantum computation according to the instruction and returns the computation results.

[Step S112] The post-processing executing unit 170 performs post-processing. For example, the post-processing executing unit 170 causes the classical computation system 310 to compute the quantum state of the output of the quantum circuit before division, based on the computation results of the individual subcircuits.

[Step S113] The post-processing executing unit 170 outputs the computation results. For example, the post-processing executing unit 170 transmits information indicating the computation results to the terminal device 400.

In this manner, the quantum circuit is cut at appropriate positions, and multiple subcircuits that enable efficient post-processing are generated. The smaller the number of subcircuits, the lower the computational cost of post-processing. However, if the number of subcircuits is too small, the size of each subcircuit becomes large and the fidelity deteriorates. Accordingly, the quantum computation support apparatus 100 divides the quantum circuit so that the number of subcircuits is minimized while maintaining the fidelity above a predetermined threshold. This makes it possible to improve fidelity at the expense of post-processing time when the fidelity is low. In other words, it is possible to shorten the post-processing time while maintaining the target fidelity.

In addition, since the assignment destinations of QPUs are selected by taking into account the waiting times of the respective QPUs, it becomes possible to search for optimal cut positions corresponding to the selected QPUs. Consequently, a reduction in user waiting time is expected. Furthermore, since QPUs with shorter waiting times are preferentially selected, the utilization of the QPUs 202a, 202b, and so on, is improved.

Furthermore, since the fidelity of each subcircuit is calculated using the error rate of the QPU assigned to that subcircuit, the fidelity is calculated with high accuracy, thereby preventing the computation results from exhibiting unexpected fidelity degradation.

(c) Third Embodiment

A third embodiment relates to a system employing quantum multiprogramming. Quantum multiprogramming is a technique for executing multiple quantum circuits in parallel on a single QPU. By applying quantum multiprogramming to a quantum computation system, the utilization efficiency of the QPUs 202a, 202b, and so on, included in the quantum computer 200, is improved.

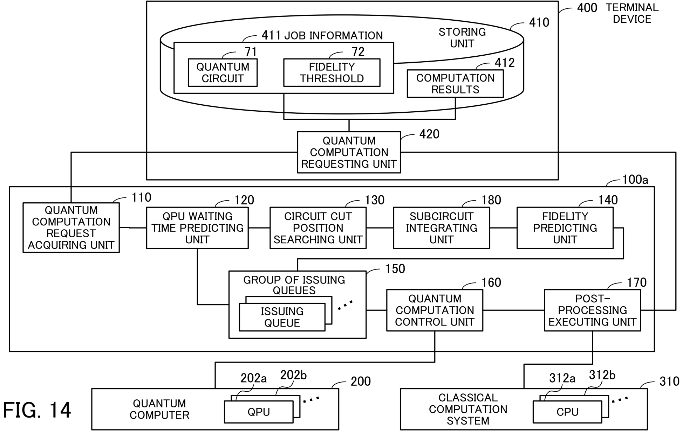

FIG. 14 is a block diagram illustrating an example of the functions of each apparatus according to the third embodiment. In FIG. 14, elements having the same functions as those in the second embodiment are denoted by the same reference numerals as those in the second embodiment, and detailed description thereof is omitted. A quantum computation support apparatus 100a according to the third embodiment includes, in addition to the functions of the quantum computation support apparatus 100 of the second embodiment, a subcircuit integrating unit 180.

The subcircuit integrating unit 180 integrates, among multiple subcircuits generated by the circuit cut position searching unit 130, tentative assignment destinations of subcircuits that are executable on a single QPU to a single QPU. In the third embodiment, the fidelity predicting unit 140 calculates, for a QPU assigned to multiple subcircuits, the fidelity in a case where the multiple subcircuits are executed in parallel. The fidelity predicting unit 140 also generates, for multiple subcircuits assigned to the same QPU, a job instructing parallel execution of those subcircuits, and registers the job in the issuing queue corresponding to the assigned QPU.

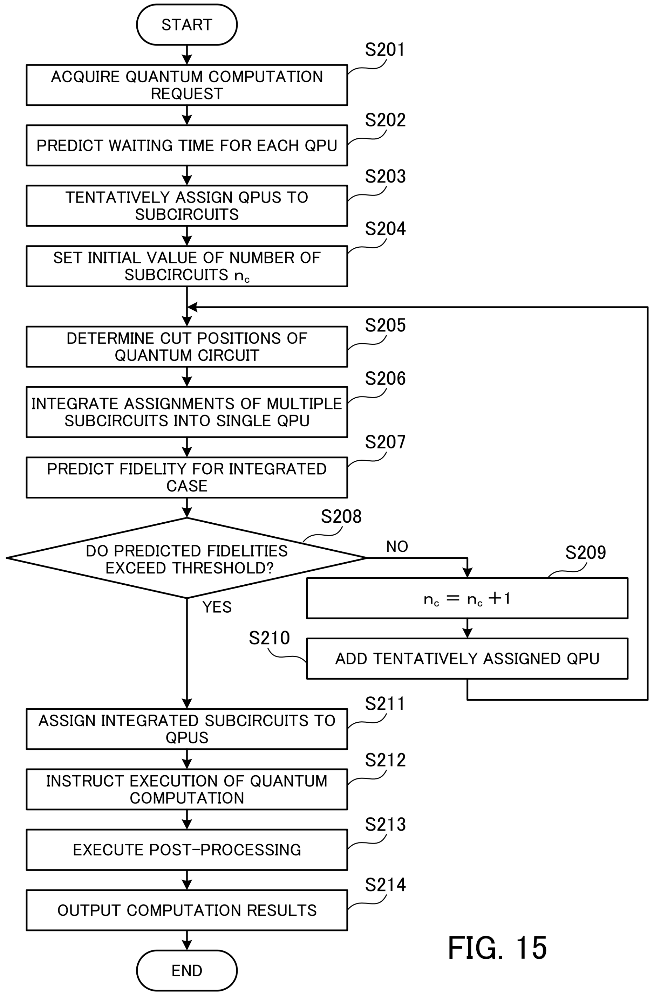

FIG. 15 is a flowchart illustrating an example of a procedure of quantum computation support processing according to the third embodiment. Among the processes illustrated in FIG. 15, steps s201 to s205, s208 to s210, and s212 to s214 correspond respectively to steps s101 to s105, s107 to s109, and s111 to s113 illustrated in FIG. 13. Among the processes illustrated in FIG. 15, the processes that differ from those in FIG. 13 are described below in accordance with the step numbers.

[Step S206] The subcircuit integrating unit 180 integrates the assignments of multiple subcircuits into a single QPU. For example, the subcircuit integrating unit 180 generates, from the multiple subcircuits generated, possible combinations of subcircuits to be integrated. The subcircuit integrating unit 180 compares the total number of qubits of the subcircuits included in each generated combination with the number of qubits of the QPUs tentatively assigned to those subcircuits. If there exists a QPU having a number of qubits greater than the total number of qubits of the subcircuits in the combination, the subcircuit integrating unit 180 integrates the tentative assignment destinations of the subcircuits in the combination into that QPU.

[Step S207] The subcircuit integrating unit 180 predicts the fidelity for the integrated case. For subcircuits that are not integrated, the subcircuit integrating unit 180 predicts the fidelity of each subcircuit individually. For multiple subcircuits that are integrated, the subcircuit integrating unit 180 calculates the fidelity based on variables such as the error rate of the QPU that is tentatively assigned in common to those subcircuits, the total number of qubits included in the subcircuits, and the total number of quantum gates.

[Step S211] When the fidelities of all subcircuits are equal to or higher than the fidelity threshold, the fidelity predicting unit 140 finalizes the assignment of the integrated subcircuits to the tentatively assigned QPUs. In this case, when multiple subcircuits are assigned to one QPU, the fidelity predicting unit 140 registers a job instructing parallel execution of those subcircuits in the issuing queue corresponding to that QPU.

In this manner, by applying quantum multiprogramming, the QPUs are utilized more efficiently. A QPU that becomes available as a result of integration is allocated to execute another job, thereby improving the overall operational efficiency of the quantum computation system.

(d) Other Embodiments

In the second and third embodiments, the post-processing is performed by the classical computation system 310 within the quantum computation system 300. However, the post-processing may alternatively be performed by a cloud computing system separate from the quantum computation system 300.

Although the embodiments have been described by way of example, the components illustrated in the embodiments may be replaced with other components having similar functions. Additional components or steps may also be incorporated. Furthermore, any combination of two or more configurations (or features) described in the embodiments may also be adopted.

According to one aspect, unexpected degradation in performance after division of a quantum circuit into subcircuits is suppressed.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to execute a process comprising:

   dividing a quantum circuit (2) into a predetermined number of subcircuits (4, 5) each assigned to one of a plurality of quantum processors (1a to 1c) included in a quantum computer (1);
   predicting fidelity when each of the predetermined number of subcircuits (4, 5) is executed by a corresponding one of the plurality of quantum processors assigned thereto;
   repeating the dividing of the quantum circuit (2) into the predetermined number of subcircuits by increasing the predetermined number of subcircuits (4, 5) and the predicting of the fidelity, when the predicted fidelity does not satisfy a predetermined criterion;
   instructing the quantum computer (1) to execute each of the predetermined number of subcircuits (4, 5) by the corresponding one of the plurality of quantum processors assigned thereto, when the criterion is satisfied; and
   calculating, by classical computation, a computation result of the quantum circuit (2) based on execution results of each of the predetermined number of subcircuits (4, 5) by the quantum computer (1).

2. The computer program according to claim 1, wherein:
   the dividing of the quantum circuit (2) into the predetermined number of subcircuits (4, 5) includes determining one or more cut positions of the quantum circuit (2) for dividing the quantum circuit (2) into the predetermined number of subcircuits by solving an optimization problem of optimizing a value of an objective function including variables indicating the one or more cut positions of the quantum circuit, under a constraint condition that a number of qubits of each of the predetermined number of subcircuits is equal to or less than a number of qubits of the corresponding one of the plurality of quantum processors assigned thereto.

3. The computer program according to claim 2, wherein:
   the optimization problem is a problem of minimizing the value of the objective function indicating an amount of the classical computation.

4. The computer program according to any of the preceding claims, wherein:
   the dividing of the quantum circuit (2) into the predetermined number of subcircuits (4, 5) includes integrating assignment destinations of two or more of the predetermined number of subcircuits that are executable in parallel by one of the plurality of quantum processors into the one of the plurality of quantum processors.

5. The computer program according to any of the preceding claims, wherein:
   the predicting of the fidelity includes predicting the fidelity of each of the predetermined number of subcircuits (4, 5) based on an error rate of the corresponding one of the plurality of quantum processors assigned thereto.

6. The computer program according to any of the preceding claims, wherein:

   the process further includes calculating, for each of the plurality of quantum processors (1a to 1c), a waiting time for executing the predetermined number of subcircuits, and selecting one or more first quantum processors based on the calculated waiting times; and
   the dividing of the quantum circuit (2) into the predetermined number of subcircuits (4, 5) includes dividing the quantum circuit into the predetermined number of subcircuits (4, 5) each assigned to one of the selected first quantum processors.

7. A quantum computation support method executed by a computer, the quantum computation support method comprising:

   dividing a quantum circuit (2) into a predetermined number of subcircuits (4, 5) each assigned to one of a plurality of quantum processors (1a to 1c) included in a quantum computer (1);
   predicting fidelity when each of the predetermined number of subcircuits (4, 5) is executed by a corresponding one of the plurality of quantum processors assigned thereto;

repeating the dividing of the quantum circuit (2) into the predetermined number of subcircuits by increasing the predetermined number of subcircuits (4, 5) and the predicting of the fidelity, when the predicted fidelity does not satisfy a predetermined criterion;

instructing the quantum computer (1) to execute each of the predetermined number of subcircuits (4, 5) by the corresponding one of the plurality of quantum processors assigned thereto, when the criterion is satisfied; and calculating a computation result of the quantum circuit (2) by classical computation based on execution results of each of the predetermined number of subcircuits (4, 5) by the quantum computer (1).

8. An information processing apparatus (10) comprising:

processing means (12) for: dividing a quantum circuit (2) into a predetermined number of subcircuits (4, 5) each assigned to one of a plurality of quantum processors (1a to 1c) included in a quantum computer (1); predicting fidelity when each of the predetermined number of subcircuits (4, 5) is executed by a corresponding one of the plurality of quantum processors assigned thereto; repeating the dividing of the quantum circuit (2) into the predetermined number of subcircuits by increasing the predetermined number of subcircuits (4, 5) and the predicting of the fidelity, when the predicted fidelity does not satisfy a predetermined criterion; instructing the quantum computer (1) to execute each of the predetermined number of subcircuits (4, 5) by the corresponding one of the plurality of quantum processors assigned thereto, when the criterion is satisfied; and calculating, by classical computation, a computation result of the quantum circuit (2) based on execution results of each of the predetermined number of subcircuits (4, 5) by the quantum computer (1).

INFORMATION PROCESSING
APPARATUS

10

INFORMATION PROCESSING APPARATUS 10

STORING UNIT 11

3
QUANTUM
PROCESSOR
INFORMATION
(NUMBER OF QUBITS,
ERROR RATE, ETC.)

2
QUANTUM
CIRCUIT

12
PROCESSING UNIT

QUANTUM CIRCUIT
DIVISION

FIDELITY
PREDICTION

QUANTUM
PROCESSOR
SELECTION

FIDELITY > THRESHOLD

6
QUEUE GROUP

1
QUANTUM
COMPUTER

4
SUBCIRCUIT

6a

1a
QUANTUM
PROCESSOR

5
SUBCIRCUIT

6b

1b
QUANTUM
PROCESSOR

6c

1c
QUANTUM
PROCESSOR

CLASSICAL
COMPUTATION
(POST-PROCESSING)

FIG. 1

400 TERMINAL DEVICE

20

NETWORK

QUANTUM
COMPUTATION
SYSTEM

300

QUANTUM COMPUTATION
SUPPORT APPARATUS
(CLASSICAL COMPUTER)

200

100

QUANTUM
COMPUTER

...

310 CLASSICAL
COMPUTATION
SYSTEM

FIG. 2

FIG. 3

K = 1, $n_c$ = 2

30 QUANTUM CIRCUIT

FIG. 4

K = 2, $n_c$ = 2

40  QUANTUM CIRCUIT

FIG. 5

FIG. 6

FIG. 7

NUMBER OF
WAITING JOBS

FIG. 8

FIDELITY

62

QPU

FIG. 9

**400 TERMINAL DEVICE**

**STORING UNIT** 410

**411 JOB INFORMATION**

**QUANTUM CIRCUIT** 71

**FIDELITY THRESHOLD** 72

**COMPUTATION RESULTS** 412

**QUANTUM COMPUTATION REQUESTING UNIT** 420

100

**QUANTUM COMPUTATION REQUEST ACQUIRING UNIT** 110

**QPU WAITING TIME PREDICTING UNIT** 120

**CIRCUIT CUT POSITION SEARCHING UNIT** 130

**FIDELITY PREDICTING UNIT** 140

**GROUP OF ISSUING QUEUES** 150

152

151

**ISSUING QUEUE**

...

**QUANTUM COMPUTATION CONTROL UNIT** 160

**POST-PROCESSING EXECUTING UNIT** 170

FIG. 10

**QUANTUM COMPUTER** 200

**QPU** 202a 202b

...

**CLASSICAL COMPUTATION SYSTEM** 310

**CPU** 312a 312b

...

27

FIG. 11

START

ACQUIRE QUANTUM COMPUTATION REQUEST — S101

PREDICT WAITING TIME FOR EACH QPU — S102

TENTATIVELY ASSIGN QPUS TO SUBCIRCUITS — S103

SET INITIAL VALUE OF NUMBER OF SUBCIRCUITS $n_c$ — S104

DETERMINE CUT POSITIONS OF QUANTUM CIRCUIT — S105

PREDICT FIDELITY — S106

DO PREDICTED FIDELITIES EXCEED THRESHOLD? — S107

NO

$n_c = n_c + 1$ — S108

ADD TENTATIVELY ASSIGNED QPU — S109

YES

ASSIGN SUBCIRCUITS TO QPUS — S110

INSTRUCT EXECUTION OF QUANTUM COMPUTATION — S111

EXECUTE POST-PROCESSING — S112

OUTPUT COMPUTATION RESULTS — S113

END

FIG. 13

FIG. 14

START

ACQUIRE QUANTUM COMPUTATION REQUEST — S201

PREDICT WAITING TIME FOR EACH QPU — S202

TENTATIVELY ASSIGN QPUS TO SUBCIRCUITS — S203

SET INITIAL VALUE OF NUMBER OF SUBCIRCUITS $n_c$ — S204

DETERMINE CUT POSITIONS OF QUANTUM CIRCUIT — S205

INTEGRATE ASSIGNMENTS OF MULTIPLE SUBCIRCUITS INTO SINGLE QPU — S206

PREDICT FIDELITY FOR INTEGRATED CASE — S207

DO PREDICTED FIDELITIES EXCEED THRESHOLD? — S208

NO

$n_c = n_c + 1$ — S209

ADD TENTATIVELY ASSIGNED QPU — S210

YES

ASSIGN INTEGRATED SUBCIRCUITS TO QPUS — S211

INSTRUCT EXECUTION OF QUANTUM COMPUTATION — S212

EXECUTE POST-PROCESSING — S213

OUTPUT COMPUTATION RESULTS — S214

END

FIG. 15

## EUROPEAN SEARCH REPORT

**Application Number**

EP 26 15 1627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAIKAT BASU ET AL: "FragQC: An Efficient Quantum Error Reduction Technique using Quantum Circuit Fragmentation", ARXIV.ORG CORNELL UNIVERSITY LIBRARY, 201 OLIN LIBRARY CORNELL UNIVERSITY ITHACA, NY 14853, 30 September 2023 (2023-09-30), XP091627386, DOI: 10.48550/arXiv.2310.00444 * the whole document * ----- | 1-8 | INV. G06N10/20 |
| A,D | WEI TANG ET AL: "CutQC: Using Small Quantum Computers for Large Quantum Circuit Evaluations", ARXIV.ORG CORNELL UNIVERSITY LIBRARY, 201 OLIN LIBRARY CORNELL UNIVERSITY ITHACA, NY 14853, 3 December 2020 (2020-12-03), XP081900864, DOI: 10.1145/3445814.3446758 * the whole document * ----- | 1-8 | |
| A | JAVIER ROMERO-ALVAREZ ET AL: "Quantum circuit scheduler for QPUs usage optimization", ARXIV.ORG CORNELL UNIVERSITY LIBRARY, 201 OLIN LIBRARY CORNELL UNIVERSITY ITHACA, NY 14853, 12 September 2024 (2024-09-12), XP091868321, DOI: 10.48550/arXiv.2404.01055 * the whole document * ----- -/-- | 1-8 | **TECHNICAL FIELDS SEARCHED (IPC)** G06N |

The present search report has been drawn up for all claims

| Place of search | Date of completion of the search | Examiner |
|---|---|---|
| The Hague | 25 March 2026 | Pijn, Daniel |

page 1 of 2

Europäisches
Patentamt

European
Patent Office

Office européen
des brevets

# EUROPEAN SEARCH REPORT

**Application Number**

EP 26 15 1627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOKUL SUBRAMANIAN RAVI ET AL: "Adaptive job and resource management for the growing quantum cloud", ARXIV.ORG CORNELL UNIVERSITY LIBRARY, 201 OLIN LIBRARY CORNELL UNIVERSITY ITHACA, NY 14853, 24 March 2022 (2022-03-24), XP091184142, DOI: 10.48550/arXiv.2203.13260 * the whole document * | 1-8 | |
| A | BISICCHIA GIUSEPPE ET AL: "Cut&Shoot: Cutting & Distributing Quantum Circuits Across Multiple NISQ Computers", 2024 IEEE INTERNATIONAL CONFERENCE ON QUANTUM COMPUTING AND ENGINEERING (QCE) IEEE, vol. 02, 15 September 2024 (2024-09-15), pages 187-192, XP034793897, DOI: 10.1109/QCE60285.2024.10276 [retrieved on 2025-01-10] * the whole document * | 1-8 | |
| X,P | AWAD WEHBE ET AL: "A fidelity-driven approach to quantum circuit partitioning via weighted hypergraphs for noise-resilient computation", ARXIV.ORG CORNELL UNIVERSITY LIBRARY, 201 OLIN LIBRARY CORNELL UNIVERSITY ITHACA, NY 14853, 7 June 2025 (2025-06-07), XP092055550, DOI: 10.48550/arXiv.2506.06867 * the whole document * | 1-8 | TECHNICAL FIELDS SEARCHED (IPC) |

The present search report has been drawn up for all claims

| Place of search | Date of completion of the search | Examiner |
|---|---|---|
| The Hague | 25 March 2026 | Pijn, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020534603 A

- US 20240160979

### Non-patent literature cited in the description

- CutQC: Using Small Quantum Computers for Large Quantum Circuit Evaluations. **WEI TANG** ; **TEAGUE TOMESH** ; **MARTIN SUCHARA** ; **JEFFREY LARSON** ; **MARGARET MARTONOSI**. ASPLOS '21: Proceedings of the 26th ACM International Conference on Architectural Support for Programming Languages and Operating Systems. Association for Computing Machinery, 17 April 2021, 473-486